Europäisches Patentamt

(19) European Patent Office

Office européen des brevets

(11) Numéro de publication: **0 135 458**
A1

(12) ## DEMANDE DE BREVET EUROPEEN

(21) Numéro de dépôt: **84430021.0**

(51) Int. Cl.⁴: **B 60 P 3/38**

(22) Date de dépôt: **25.06.84**

(30) Priorité: **29.06.83 FR 8310945**

(43) Date de publication de la demande:
**27.03.85 Bulletin 85/13**

(84) Etats contractants désignés:
**DE GB IT NL**

(71) Demandeur: **Valdy, Pierre**
**6, Hameau St-François Chemin des Hoirs**
**F-83140 Six-Fours(FR)**

(72) Inventeur: **Valdy, Pierre**
**6, Hameau St-François Chemin des Hoirs**
**F-83140 Six-Fours(FR)**

(54) **Module d'habitation pliant destiné à être monté sur le toit d'un véhicule automobile.**

(57) Le module d'habitation est formé principalement par un coffre (2,3) fixé sur le toit du véhicule.

Le couvercle du coffre se déplie en deux parties (4,5) pour venir former un plancher d'habitation au niveau du capot du véhicule.

Une capote solidaire d'arceaux articulés vient se refermer sur l'ensemble composé d'un lit au niveau du toit et d'un plancher au niveau du capot.

L'invention concerne le domaine des loisirs et plus spécialement celui du camping caravaning.

Fig-3

EP 0 135 458 A1

Croydon Printing Company Ltd.

## Module d'habitation pliant destiné à être monté sur le toit d'un véhicule automobile

L'invention concerne le domaine des loisirs et plus spécialement celui du camping caravaning.

Elle a pour objet un module d'habitation pliant destiné à être monté sur le toit d'un véhicule automobile.

Il existe actuellement sur le marché des lits de toit constitués essentiellement par un bac inférieur supportant le lit et un bac supérieur destiné à être soulevé de bas en haut et à former en collaboration avec une toile latérale, un abri pour la nuit.

Leur principal inconvénient est de n'être qu'un lit limitant par là même l'intérêt de leur utilisation. En effet, aucune surface au sol ou volume annexe n'est disponible pour permettre de vivre à l'étape, c'est-à-dire, pouvoir s'asseoir, manger à table, faire sa toilette. De plus, l'accès y est très peu aisé lorsqu'il se situe au sommet d'une échelle latérale dont l'extrêmité se trouve au dessus du toit du véhicule et rend donc périlleux les différents trajets entre le sol et le lit.

L'invention vise à fournir un ensemble qui, monté sur le toit du véhicule, une fois déplié, offre une surface et un volume maximum permettant par là même de constituer un module d'habitation réel.

On comprendra mieux l'invention en se référant aux dessins et figures suivantes :

- La figure 1 représente le dispositif fermé
- La figure 2 représente le dispositif ouvert
- La figure 3 représente le dispositif dont la capote a été dépliée, prêt à l'emploi
- La figure 4 représente une vue d'ensemble détaillée du dispositif.

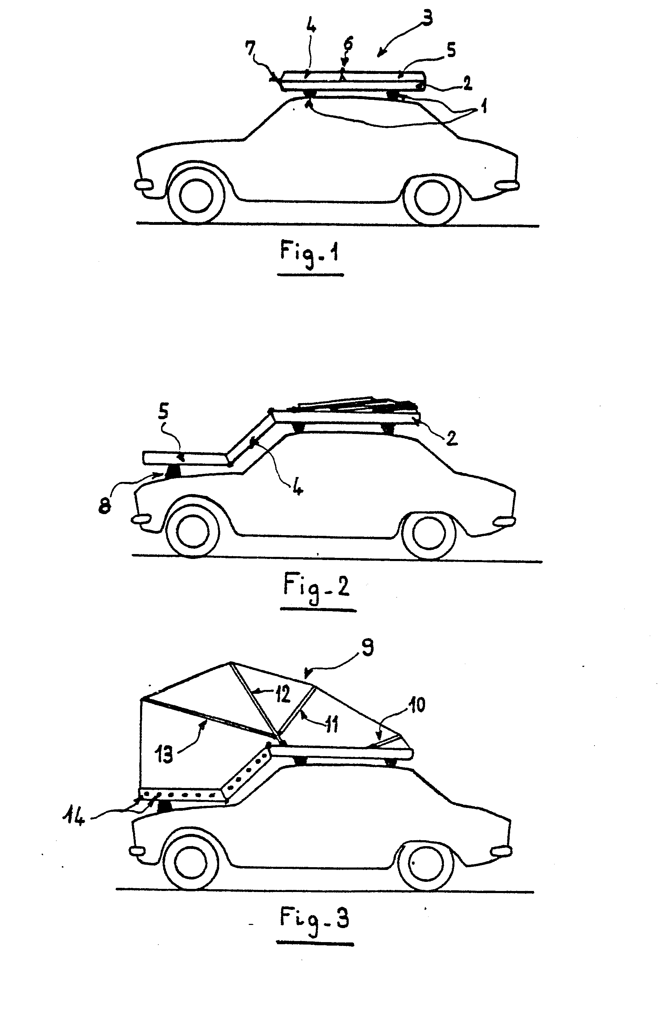

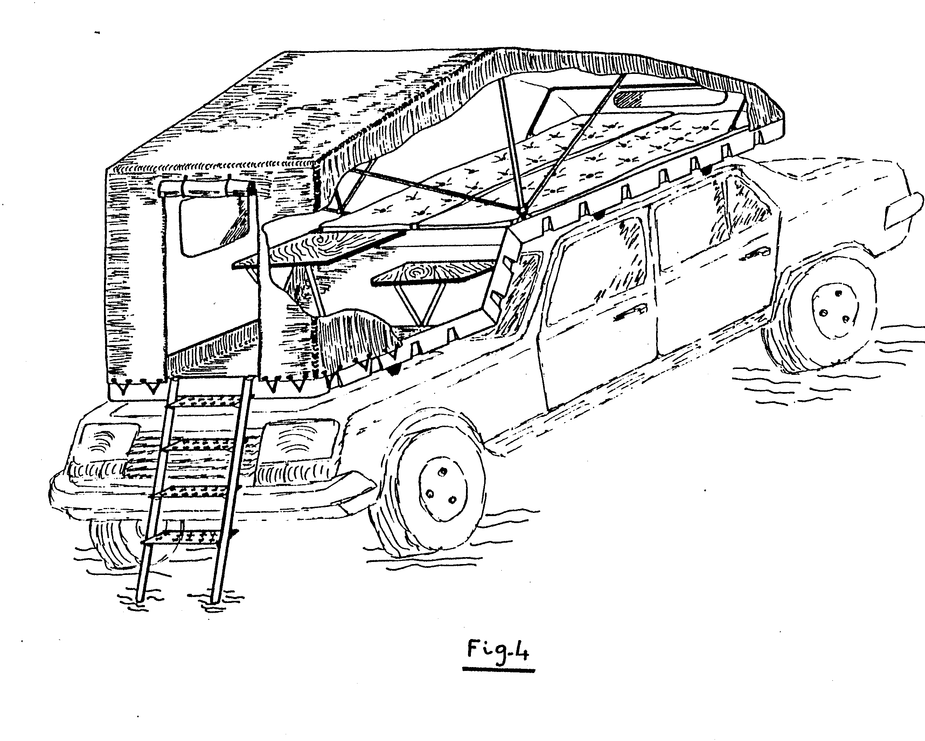

La figure 1 représente le dispositif fermé, monté sur le toit d'un véhicule par l'intermédiaire de supports (1).

Le dispositif est essentiellement constitué par un bac inférieur (2) et un bac supérieur (3) lui même formé de deux parties 4 et 5 articulées autour d'une charnière (6). L'ensemble est lui même articulé autour d'une charnière (7) fixée à l'extrêmité avant du bac inférieur (2).

Le fonctionnement du dispositif est le suivant (Figure 2). Le bac

**0135458**

supérieur (3), formé de ses deux parties (4 et 5) vient pivoter sur l'avant du bac inférieur (2) jusqu'à ce que sa partie (4) vienne longer le parebrise du véhicule et que sa partie (5) vienne s'appuyer de manière sensiblement horizontale sur les supports (8) au niveau du capot du véhicule.

Le dispositif ouvert présente alors une surface sensiblement du double de sa surface initiale.

La figure 3 représente le dispositif prêt à l'emploi : la capote (9) solidaire d'arceaux pivotants (10, 11, 12, 13) vient se déplier sur l'avant pour abriter l'ensemble. Elle vient se fixer au moyen de fixations larguables (14) au niveau des parties (4 et 5).

La figure 4 représente une vue d'ensemble détaillée du dispositif : on constate que les bacs inférieurs (2) et supérieurs (3) sont fortement nervurés afin de donner un maximum de rigidité pour un minimum de poids.

L'arceau (10) est articulé en un point proche de l'arrière du bac inférieur ; les arceaux 11, 12 et 13 sont de manière préférentielle regroupés en des points d'articulation proches de l'extrêmité avant du bac inférieur.

L'arceau (13) est avantageusement télescopique afin de pouvoir se loger à l'intérieur du bac une fois replié.

La capote est percée d'ouvertures transparentes afin de donner de la clarté et vue sur l'extérieur.

A l'avant, se trouve une porte à fermeture à glissière.

Une échelle située à l'avant permet l'accès à l'habitacle.

L'aménagement intérieur est essentiellement consititué par un matelas formant lit (15) situé sur le toit du véhicule, par une table (16) montée sur une charnière (17) permettant son rabattement sur le matelas et d'une marche escamotable (18) servant éventuellement de siège.

Bien entendu, l'invention n'est pas limitée à ce qui a été décrit et représenté, de nombreux aménagements pourraient être apportés sans pour cela sortir du cadre de l'invention.

C'est ainsi que les bacs pourraient être soit en plastique renforcé de fibres, nervurés et comportant des panneaux de rigidification, formant structure "sandwich" soit en plastique moulé, soit encore

0135458

en tôle emboutie.

Le capote (9) pourrait se déplier en même temps que le bac supérieur en y étant liée de façon permanente.

L'échelle située à l'avant pourrait avoir un rôle de support du bac supérieur une fois déplié et se substituer alors aux supports (8).

Elle pourrait aussi prendre place sur le côté du véhicule.

Les arceaux pourraient être articulés au moyen de dispositifs à parallélogramme.

D'autres types d'aménagements pourraient venir prendre place dans la partie avant en complément de la table et de la marche.

Les articulations à charnières pourraient aussi avantageusement être remplacées par une liaison démontable permettant de mettre en position successivement les parties 4 et 5 du bac supérieur (3).

## Revendications

1. Dispositif d'habitation destiné à être monté sur le toit d'un véhicule automobile par l'intermédiaire de supports (1) caractérisé en ce qu'il est constitué par un bac inférieur (2) fixe situé sur le toit du véhicule et par un bac supérieur (3) formé de deux parties (4 et 5), bac supérieur articulé de telle façon que lors de son déploiement la partie (4) vienne longer le parebrise du véhicule et que la partie (5) vienne s'appuyer de manière sensiblement horizontale au niveau du capot du véhicule.

2. Dispositif suivant la revendication 1 caractérisé en ce qu'il est équipé d'une capote (9) solidaire d'arceaux pivotants (10, 11, 12, 13) venant se déplier sur l'avant du véhicule.

3. Dispositif suivant les revendications 1 et 2 caractérisé en ce que l'ensemble de la capote est maintenu en position fermée par des fixations larguables (14) situées au niveau du bac (3).

4. Dispositif suivant les revendications 1, 2 et 3 caractérisé en ce que l'accès de l'habitation est constitué par une échelle située à l'avant du véhicule.

5. Dispositif suivant la revendication 4 caractérisé en ce que l'échelle constitue le support du bac (3).

6. Dispositif suivant les revendications 1, 2 et 3 caractérisé en ce que le bac (3) repose sur des supports (8) fixés au niveau du capot du véhicule.

7. Dispositif suivant les revendications 1, 2 et 3 caractérisé en ce que le bac inférieur (2) reçoit un matelas (15).

8. Dispositif suivant les revendications 1, 2 et 3 caractérisé en ce qu'il est équipé d'une table articulée sur l'avant du bac inférieur et rabattable sur le matelas.

**0135458**

Fig-1

Fig-2

Fig-3

Fig.4

## Office européen des brevets — RAPPORT DE RECHERCHE EUROPEENNE

01 35 458

Numéro de la demande

EP 84 43 0021

### DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl ³) |
|---|---|---|---|
| X | FR-A-2 085 386 (GUERIN) <br><br> * Figures 1-6 * <br><br> --- | 1,2,4-6,8 | B 60 P 3/38 |
| X | US-A-4 111 479 (RIZOTTO) <br> * Figures 1-4 * <br><br> --- | 1-3,6 | |
| A | US-A-3 712 315 (FRANZEN) <br> * Figure 13, numéro de référence 209 * <br><br> --- | 7 | |
| A | EP-A-0 023 466 (FRALCH) <br><br> ----- | | |

DOMAINES TECHNIQUES RECHERCHES (Int. Cl. ³)

B 60 P 3/00

Le présent rapport de recherche a été établi pour toutes les revendications

| Lieu de la recherche <br> BERLIN | Date d'achèvement de la recherche <br> 21-09-1984 | Examinateur <br> LUDWIG H J |
|---|---|---|